Europäisches Patentamt

European Patent Office

Office européen des brevets

(19)

(11) Publication number: **0 386 963 B1**

# EUROPEAN PATENT SPECIFICATION

(45) Date of publication of patent specification: **28.12.94**

(51) Int. Cl.5: **A23L 2/38**, A23L 2/26, A23L 1/236

(21) Application number: **90302268.9**

(22) Date of filing: **02.03.90**

(54) **Preventing off-flavor in certain alitame-sweetened beverages.**

(30) Priority: **08.03.89 US 320684**

(43) Date of publication of application:
**12.09.90 Bulletin 90/37**

(45) Publication of the grant of the patent:
**28.12.94 Bulletin 94/52**

(84) Designated Contracting States:
**AT BE CH DE DK ES FR GB GR IT LI LU NL SE**

(56) References cited:
**EP-A- 0 034 876**
**EP-A- 0 088 367**
**US-A- 4 430 349**

**"Merck Index", 10th edition, 1983, page 508,
edited by M. Windholz et al.,**

**Merck & Co., Rahway, NJ, US**

(73) Proprietor: **PFIZER INC.**
**235 East 42nd Street**
**New York, N.Y. 10017 (US)**

(72) Inventor: **Glowaky, Raymond Charles**
**31 Greencliff Drive**
**Niantic,**
**Connecticut (US)**
Inventor: **Sklavounos, Constantine**
**7, East Wharf Road**
**Waterford,**
**Connecticut (US)**
Inventor: **Torres, Anibal**
**5, Soundview Drive**
**Waterford,**
**Connecticut (US)**

(74) Representative: **Wood, David John et al**
**PFIZER LIMITED,**
**Ramsgate Road**
**Sandwich,**
**Kent CT13 9NJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention is directed to alitame-sweetened carbonated beverages, having a pH below 4.0 in which the development of off-flavor has been avoided or minimized by formulating the beverage with edetic acid or a food acceptable cationic salt thereof; and to the method of avoiding or minimizing the development of said off-flavor in said beverages.

Alitame is the generic name which has been assigned to 3-(L-aspartyl-D-alaninamido)-2,2,4,4-tetramethylthietane), an artificial-sweetening agent earlier described by Brennan et al., U.S. Patent 4,411,925. In the field of artificially-sweetened beverages, retention of sweetness and of the original flavor on storage are of utmost importance. The consumer develops a preference for the particular flavor of a particular beverage, and will frequently find any perceptible deviation in that flavor unacceptable. Alitame meets the first of these criteria, retention of sweetness, very well. However, we have now employed a highly sensitive taste panel "pass/fail" test which demonstrates that in certain commercial or commercial-type, acidic beverages (having a pH below 4) which have been sweetened with alitame, there is a temperature/time dependent development of an off-flavor, detected by odor after storage (generally at elevated temperatures to accelerate the effects of normal storage conditions). While such development of off-flavor is not found in all acidic, alitame-sweetened beverages, it is found in some alitame-sweetened, citrus-flavored carbonated beverages, and with particularly high frequency in alitame-sweetened, caramel-colored beverages.

The nature of the off-flavor is not known. This is in spite of extensive efforts to detect and identify materials which are responsible for the off-flavor, employing the most sensitive, modern analytical methods. Our studies have suggested that the present off-flavor is associated, at least in part, with caramel color components, and with various organic acids (particularly those associated with fruit). However, short of total reformulation with consequent changes in appearance or taste which would be generally unacceptable to existing consumer preferences, there was no obvious way to prevent development of off-flavor in these particular alitame-sweetened beverages.

Fortunately, we have now found that the development of off-flavor in these beverages can generally be avoided or substantially reduced (i.e., any perceptible flavor change during storage which is associated with the alitame used as sweetening agent can be completely or partially overcome) by formulating the beverage with edetic acid or a food-acceptable cationic salt thereof. Only a single commercial, carbonated beverage was found which, when sweetened with alitame, was not stabilized against development of off-flavor by EDTA (Example 2, Beverage I). This beverage was found to contain an unusually high level of iron, and indeed, when iron was deliberately added to a similar beverage in a separate experiment (Example 4), a similar failure of EDTA to prevent development of off-flavor was observed. This observation might be interpreted as evidence that stabilization by EDTA involves simple chelation of iron. However, contrary to what would be expected for a simple chelation mechanism, a corresponding increase in EDTA level did not reverse the effect (Example 2).

In cases where unusually high iron levels lead to development of off-flavor in carbonated beverages, use of EDTA in conjunction with lowered iron levels should overcome the problem without significant effect on the consumer-accepted taste of the beverages.

Edetic acid has found prior use in certain beverages as a sequestrant. For example, edetic acid has been used in beer to prevent "gushing" or "wildness" caused by trace metals, to eliminate the astringent taste of beer which has been treated with zinc salts, and to prevent "chill haze" by counteracting the inhibiting effect of copper on proteolytic enzymes; and in milk to overcome off-flavor resulting from trace copper, and to control heat coagulation of milk used in manufacturing confections. See CRC Handbook of Food Additives, 2nd Ed., Volume I, T. E. Furia, editor, CRC Press, Inc. Cleveland, 1972, pp. 285-287. It is highly doubtful that edetic acid is simply functioning as a sequestering agent in the present invention, since neither citrate nor phosphate, also sequestering agents and commonly found in carbonated beverages, are effective in avoiding development of off-flavor associated with use of alitame as an artificial sweetener.

The present invention encompasses a method of preventing or substantially reducing the temperature/time dependent development of off-flavor in a carbonated beverage having a pH less than 4.0 and sweetened with alitame or a food-acceptable acid addition salt or cationic salt thereof, which comprises incorporating into said beverage an off-flavor preventing or reducing amount of edetic acid or a food-acceptable cationic salt thereof. The present invention is of particular value when the alitame is incorporated into the beverage in its amphoteric form, and the edetic acid, for ease of dissolution, is incorporated into the beverage in the form of its disodium salt or its calcium disodium salt.

This method finds use in carbonated beverages, especially those which are citrus flavored, or caramel-colored and cola-flavored.

The present invention is also directed to beverages which have been stabilized by this method.

The present invention is readily carried out. Alitame-sweetened beverages which would otherwise develop off-flavor on storage are simply formulated using edetic acid or preferably, for ease of dissolution, a food-acceptable cationic salt thereof, at a level in the range of 10-50 ppm.

Edetic acid is the principal name given by Merck Index, 10th Ed., monograph no. 3490, Merck & Co. Inc., Rahway, NJ, 1983, p. 508 to the aminoacid of the formula

$$(HOOCCH_2)_2 NCH_2 CH_2 N(CH_2 COOH)_2,$$

also known as ethylenediaminetetracetic acid or EDTA. Edetic acid and its salts, e.g., calcium disodium edetate, disodium edetate, trisodium edetate and dipotassium edetate dihydrate are well known as sequestering (chelating) agents and are generally available commercially in a grade suitable for use as a food-additive.

The following examples are given by way of illustration.

EXAMPLE 1

Preventing Off-Flavor in Commercial Dietary Carbonated Beverages Sweetened with Alitame

Commercial carbonated beverages were purchased at local grocery stores. These were transferred to glass bottles, alitame was added to half the bottles at a level of 45 ppm and these samples were then stored undisturbed in 37°C incubators until the scheduled evaluation.

At the appropriate test time, "with alitame" and "without alitame" samples were removed from the incubators, cooled to ca. 5°C and organoleptically (odor) evaluated for differences in flavor.

In the evaluation, trained panelists were subjected to a forced choice, triangle difference test as described in "Manual on Sensory Testing Methods" ASTM Publication 434, 1968, pp. 24-29. The number of correct identifications required for 95% significance were taken from the above ASTM publication, Table 5, p. 68. Commonly 12 panelists were employed thus requiring 8 or more correct identifications of the odd sample for a "fail" rating, indicating a statistically perceptable flavor difference attributable to alitame.

If a statistically significant flavor difference was detected, the test was repeated with 16 ppm of disodium edetate added to all samples prior to incubation at 37°C.

Table 1 summarizes the label ingredients for various commercial, carbonated diet beverages used in the present studies.

Table 2 describes the results of EDTA treatment of a variety of carbonated beverages. In each case that a flavor difference was observed, EDTA was found to prevent the development of off-flavor in the beverage.

TABLE 1

Label Ingredients of Various Carbonated, Diet Beverages

| Beverage: (See text): | A | B | C | D | E | F | G | H | I | J |
|---|---|---|---|---|---|---|---|---|---|---|
| Carbonated water | x | x | x | x | x | x | x | x | x | x |
| Caramel color | x | x | x | x |  |  |  |  |  | x |
| Aspartame | x | x | x | x | x | x | x | x | x | x |
| Sodium saccharin |  |  |  | x |  |  |  |  |  |  |
| Phosphoric acid | x | x | x |  |  |  |  |  |  |  |
| Monosodium phosphate |  |  | x |  |  |  |  |  |  |  |
| Potassium benzoate | x | x |  |  | x | x | x |  |  |  |
| Sodium benzoate |  |  | x | x |  |  |  | x | x | x |
| Potassium sorbate |  |  |  |  |  | x |  | x |  |  |
| Citric acid | x | x |  |  | x | x | x | x | x |  |
| Sodium citrate |  |  |  | x |  |  |  |  | x |  |
| Potassium citrate |  |  |  |  |  |  | x |  |  |  |
| Caffeine | x | x | x |  |  |  |  |  |  |  |
| Natural flavorings | x | x | x | x |  | x | x | x | x | x |
| Citrus juice |  |  |  |  | x |  |  |  |  |  |
| Citrus oil |  |  |  |  | x |  |  |  |  |  |
| Orange |  |  |  |  |  |  |  |  | x |  |
| Artificial flavors |  |  |  |  |  |  |  |  |  | x |
| Concentrated orange juice |  |  |  |  |  | x |  | x |  |  |
| Blended concentrated fruit juice |  |  |  |  |  |  | x |  | x |  |
| Lactic acid |  |  | x |  |  |  |  |  |  |  |
| Malic acid |  |  |  | x |  |  |  | x | x | x |
| BHA |  |  |  |  |  |  | x |  |  |  |
| Erythorbic acid |  |  |  |  | x |  |  |  |  |  |
| Ascorbic acid |  |  |  |  | x | x | x | x | x |  |
| Niacinamide |  |  |  |  | x |  |  |  |  |  |
| D-Calcium pantothenate |  |  |  |  | x |  |  |  |  |  |
| Pyridoxine hydrochloride |  |  |  |  | x |  |  |  |  |  |
| Biotin |  |  |  |  | x |  |  |  |  |  |
| Cyanocobalamine |  |  |  |  | x |  |  |  |  |  |
| Polyethylene glycol |  |  | x |  |  |  |  |  |  |  |
| Glycerol abietate |  |  |  |  | x |  |  | x |  |  |
| Brominated vegetable oil |  |  |  |  | x | x | x |  |  |  |
| Modified food starch |  |  |  |  |  |  |  | x | x |  |
| Glycerol ester of wood rosin |  |  |  |  |  | x | x |  | x |  |
| Carob bean gum |  |  |  |  |  | x |  | x |  |  |
| Gum arabic |  |  |  |  |  |  | x | x | x |  |
| Citrus pectin |  |  |  |  |  |  | x |  |  |  |
| Salt |  |  |  |  |  |  | x |  |  |  |
| Yellow #6 |  |  |  |  |  | x |  |  |  |  |
| Yellow #5 |  |  |  |  |  | x | x |  |  |  |
| Artificial color |  |  |  |  |  |  | x | x | x |  |

4

EP 0 386 963 B1

Table 2

| Preventing Off-Flavor in Alitame-Sweetened, Carbonated Beverages with Edetic Acid | | | |
|---|---|---|---|
| Diet Beverage[a] | pH | EDTA[b] | Triangle Test[c] |
| Cola A | 3.1 | No<br>Yes | Fail<br>Pass |
| Cola B | 3.1 | No<br>Yes | Fail<br>Pass |
| Flavored Cola C | 3.0 | No<br>Yes | Fail<br>Pass |
| Ginger Ale D | 3.5 | No | Pass |
| Grapefruit E | 3.1 | No<br>Yes | Fail<br>Pass |
| Orange F | 3.3 | No<br>Yes | Fail<br>Pass |
| Mandarin Orange G<br>Root Beer J | 3.3<br>4.2 | No<br>No | Pass<br>Pass |

[a] See Table 1 for labeled contents.
[b] EDTA (disodium form) used at 16 ppm.
[c] Evaluation of beverages incubated 6 weeks at 37°C with and without alitame; triangle difference test results of 8 or more correct out of 12 panelists for "fail" rating.

EXAMPLE 2

Effect of Iron Levels on Development of Off-Flavor

Three commercial diet orange sodas were tested as described in Example 1. After 6 weeks at 37°C all developed a perceptible change in flavor attributable to alitame, as shown in Table 3. For the brands F and H, the addition of EDTA stabilized the flavor of the test beverages. However, the brand I, with a high soluble iron level, failed to pass the test even after the addition of EDTA (up to 50 ppm).

Table 3

| Off-Flavor in Orange Flavored Carbonated Beverages with Edetic Acid | | | | |
|---|---|---|---|---|
| Diet Beverage[a] | pH | EDTA[b] | Iron Level[c] | Triangle Evaluation[d] |
| Orange F | 3.3 | No<br>Yes | 0.22 ppm<br>0.22 ppm | Fail<br>Pass |
| Orange H | 3.2 | No<br>Yes | 0.12 ppm<br>0.12 ppm | Fail<br>Pass |
| Orange I | 3.3 | No<br>Yes | 0.51 ppm<br>0.51 ppm | Fail<br>Fail |

[a] See Table 1 for label ingredients.
[b] EDTA (disodium form) used at 16 ppm.
[c] Measured by inductively coupled plasma.
[d] Evaluation of beverages incubated 6 weeks at 37°C with and without alitame; triangle difference test results greater than 8 correct out of 12 panelist for "fail" rating.

EXAMPLE 3

Effect of pH on Development of Off-Flavor

The pH of commercial diet colas A and B (see Example 1 for labeled contents) which developed a perceptible flavor change with alitame (see Example 1), was adjusted from 3.1 to 4.5 with sodium hydroxide. To half of the samples alitame was added (45 ppm). After incubation for 4 weeks at 37°C, no flavor difference could be detected between the "with alitame" and the "without alitame" samples.

The pH of commercial root beer G (see Example 1 for labeled conents), which did not develop a perceptible flavor change with alitame (see Example 1), was adjusted from 4.2 to 3.0 with citric acid. To half the sample alitame was added (45 ppm). After incubation for 4 weeks at 37°C, a perceptible flavor difference was detectable between the "with alitame" and the "without alitame" samples.

EXAMPLE 4

Effect of Iron on EDTA Stabilization of Flavor in a Commercial Orange Soda

A commercial batch of diet orange soda I (see Example 1 for labeled contents) was found to contain 0.1 ppm iron, measured by inductively coupled plasma. Samples were spiked with nothing (negative control), 30 ppm disodium EDTA, and 30 ppm disodium EDTA plus 0.3 ppm iron ($FeCl_3$ used). To half the samples alitame was added (45 ppm). After incubation at 37°C, organoleptic evaluations were carried out as described in Example 1. The results are presented in Table 4 and show that EDTA stabilized the flavor of the test beverage for 3 weeks. No stabilization was evident in the beverage which was spiked with additional iron.

Table 4

| EDTA (ppm) | Spiked Fe (ppm) | Triangle Evaluation | |
|---|---|---|---|
| | | 3 weeks | 6 weeks |
| none | none | Fail | Fail |
| 30 | none | Pass | Fail |
| 30 | 0.3 | Fail | Fail |

While the development of off-flavor was not totally prevented in this batch of carbonated orange soda, the fact that the beverage passed after three weeks storage at 37°C shows that the EDTA nevertheless reduced the development of off-flavor.

**Claims**

1.   A method of preventing or reducing the temperature/time dependent development of off-flavor in a carbonated beverage having a pH less than 4.0 and sweetened with alitame or a food-acceptable acid addition salt or cationic salt thereof, which comprises incorporating into said beverage an effective amount of edetic acid or a food-acceptable cationic salt thereof.

2.   A method of claim 1 wherein alitame is incorporated into the beverage in its amphoteric form.

3.   A method of claim 1 or 2 wherein the edetic acid is incorporated into the beverage in the form of its disodium salt or its calcium disodium salt.

4.   A method of claim 1, 2 or 3 wherein the beverage is caramel-colored and cola-flavored.

5.   A method of claim 1, 2 or 3 wherein the beverage is citrus-flavored.

6.   A carbonated beverage having a pH of less than 4.0 and sweetened with alitame or a food-acceptable acid addition salt or cationic salt thereof, which comprises an amount of edetic acid or a food-acceptable cationic salt thereof which is effective in preventing or reducing the temperature/ time dependent development of off-flavor.

7. A beverage of claim 6 wherein alitame has been incorporated into the beverage in its amphoteric form.

8. A beverage of claim 6 or 7 wherein the edetic acid has been incorporated into the beverage in the form of its disodium salt or its calcium disodium salt.

9. A beverage of claim 6, 7 or 8 which is caramel-coloured and cola-flavored.

10. A beverage of claim 6, 7 or 8 which is citrus-flavored.

**Patentansprüche**

1. Verfahren zur Verhinderung oder Reduzierung der Temperatur/Zeit-abhängigen Entwicklung eines Beigeschmacks bei einem kohlensäurehaltigen Getränk eines pH-Werts von weniger als 4,0, das mit Alitam oder einem Nahrungsmittel-akzeptablen Säureadditionssalz oder kationischen Salz hiervon gesüßt ist, durch Einarbeiten einer wirksamen Menge von Edetinsäure oder eines Nahrungsmittel-akzeptablen kationischen Salzes hiervon in das Getränk.

2. Verfahren nach Anspruch 1, wobei Alitam in das Getränk in seiner amphoteren Form eingearbeitet wird.

3. Verfahren nach Anspruch 1 oder 2, wobei die Edetinsäure in das Getränk in Form ihres Dinatriumsalzes oder ihres Calciumdinatriumsalzes eingearbeitet wird.

4. Verfahren nach Anspruch 1, 2 oder 3, wobei das Getränk eine Caramelfarbe und ein Colaaroma aufweist.

5. Verfahren nach Anspruch 1, 2 oder 3, wobei das Getränk ein Citrusaroma aufweist.

6. Kohlensäurehaltiges Getränk eines pH-Werts von weniger als 4,0, das mit Alitam oder einem Nahrungsmittelakzeptablen Säureadditionssalz oder kationischen Salz hiervon gesüßt ist, umfassend eine Menge an Edetinsäure oder eines Nahrungsmittel-akzeptablen kationischen Salzes hiervon, die die Temperatur/Zeit-abhängige Entwicklung eines Beigeschmacks verhindert oder verringert.

7. Getränk nach Anspruch 6, wobei Alitam in das Getränk in seiner amphoteren Form eingearbeitet ist.

8. Getränk nach Anspruch 6 oder 7, wobei die Edetinsäure in das Getränk in Form ihres Dinatriumsalzes oder ihres Calciumdinatriumsalzes eingearbeitet ist.

9. Getränk nach Anspruch 6, 7 oder 8, das eine Caramelfarbe und ein Colaaroma aufweist.

10. Getränk nach Anspruch 6, 7 oder 8, das ein Citrusaroma aufweist.

**Revendications**

1. Procédé pour empêcher ou pour réduire la dégradation, liée à la température et au temps, de l'arôme d'une boisson gazeuse ayant un pH inférieur à 4,0 et édulcorée à l'alitame ou avec un sel d'addition d'acide ou un sel cationique de ce composé acceptable dans l'alimentation, qui comprend l'incorporation à cette boisson d'une quantité efficace d'acide édétique ou d'un sel cationique de cet acide acceptable dans l'alimentation.

2. Procédé suivant la revendication 1, dans lequel l'alitame est incorporé à la boisson sous sa forme amphotère.

3. Procédé suivant la revendication 1 ou 2, dans lequel l'acide édétique est incorporé à la boisson sous la forme de son sel disodique ou de son sel calcique-disodique.

7

4. Procédé suivant la revendication 1, 2 ou 3, dans lequel la boisson est colorée au caramel et parfumée au cola.

5. Procédé suivant la revendication 1, 2 ou 3, dans lequel la boisson a un arôme d'agrume.

6. Boisson gazeuse ayant un pH inférieur à 4,0 et édulcorée à l'alitame ou avec un sel d'addition d'acide ou un sel cationique de ce composé acceptable dans l'alimentation, qui comprend une quantité d'acide édétique ou d'un sel cationique de cet acide acceptable dans l'alimentation, qui est efficace pour prévenir ou réduire la dégradation d'un arôme liée à la température et au temps.

7. Boisson suivant la revendication 6, à laquelle l'alitame a été incorporé sous sa forme amphotère.

8. Boisson suivant la revendication 6 ou 7, à laquelle l'acide édétique a été incorporé sous la forme de son sel disodique ou de son sel calcique-disodique.

9. Boisson suivant la revendication 6, 7 ou 8, qui est colorée au caramel et parfumée au cola.

10. Boisson suivant la revendication 6, 7 ou 8, qui contient un arôme d'agrume.